(19) **Europäisches Patentamt**
**European Patent Office**
**Office européen des brevets**

(11) **EP 4 760 809 A1**

(12) **EUROPEAN PATENT APPLICATION**
published in accordance with Art. 153(4) EPC

(43) Date of publication:
**17.06.2026 Bulletin 2026/25**

(21) Application number: **24913653.2**

(22) Date of filing: **27.12.2024**

(51) International Patent Classification (IPC):
*H01M 4/36* (2006.01)   *H01M 4/38* (2006.01)
*H01M 4/48* (2010.01)   *H01M 4/134* (2010.01)
*H01M 10/0525* (2010.01)   *C01B 33/113* (2006.01)
*C01B 32/05* (2017.01)   *H01M 4/02* (2006.01)

(52) Cooperative Patent Classification (CPC):
**C01B 32/05; C01B 33/113; C01B 33/22;
H01M 4/02; H01M 4/134; H01M 4/36; H01M 4/38;
H01M 4/48; H01M 10/0525;** Y02E 60/10

(86) International application number:
**PCT/KR2024/021237**

(87) International publication number:
**WO 2025/143848 (03.07.2025 Gazette 2025/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **27.12.2023 JP 2023221546**

(71) Applicant: **LG Energy Solution, Ltd.
Seoul 07335 (KR)**

(72) Inventors:
• **MATSUBARA, Keiko
Yokohama-shi, Kanagawa 220--0011 (JP)**
• **TAKAMUKU, Akira
Yokohama-shi, Kanagawa 220--0011 (JP)**

(74) Representative: **Hoffmann Eitle
Patent- und Rechtsanwälte PartmbB
Arabellastraße 30
81925 München (DE)**

(54) **NEGATIVE ELECTRODE ACTIVE MATERIAL, NEGATIVE ELECTRODE, NON-AQUEOUS ELECTROLYTE SECONDARY BATTERY, AND METHOD FOR MANUFACTURING NEGATIVE ELECTRODE ACTIVE MATERIAL**

(57)     The present invention improves at least one among the initial efficiency, the battery capacity, and the cycle characteristics of a non-aqueous electrolyte secondary battery. A negative electrode active material for a non-aqueous electrolyte secondary battery according to an embodiment of the present invention comprises porous composite particles containing silicon and silicon oxide (SiOx, $0 < x \leq 2$), wherein some or all of the pores of the porous composite particles are filled with carbon, and some or all of the surfaces of the porous composite particles are coated with carbon.

**(Cont. next page)**

EP 4 760 809 A1

FIG. 1

**Description**

TECHNICAL FIELD

The present disclosure relates to a negative electrode active material, a negative electrode, a nonaqueous electrolyte secondary battery, and a method for preparing a negative electrode active material.
This application is based on and claims priority from Japanese Patent Application No. 2023-221546 filed on December 27, 2023, the disclosure of which is incorporated herein in its entirety by reference.

BACKGROUND ART

Recently, technologies of adding silicon oxide to a negative electrode active material of a lithium-ion secondary battery have been developed. For example, Patent document 1 discloses a technology of adding silicon oxide pre-doped with lithium to a negative electrode active material.

DISCLOSURE

Technical Problem

However, in a negative electrode material to which silicon oxide is added, initial efficiency is lowered in many cases due to a lithium silicate phase formed during charge. In addition, when silicon oxide is pre-doped with lithium as described in Patent document 1, it is likely that battery capacity is lowered due to formation of a lithium silicate phase.
The present disclosure is designed to solve the problems of the related art, and therefore the present disclosure is directed to providing a negative electrode active material capable of improving at least one of initial efficiency, battery capacity and cycle characteristics of a nonaqueous electrolyte secondary battery, a negative electrode, a nonaqueous electrolyte secondary battery, and a method for preparing a negative electrode active material.

Technical Solution

The inventors of the present disclosure thought that Si contributing to battery capacity could be increased by reducing silicon oxide with metallic magnesium (Mg), while removing magnesium oxide produced thereby with ease. Therefore, the inventors of the present disclosure have examined intensively and found that it is possible to improve initial efficiency, battery capacity and/or cycle characteristics of a nonaqueous electrolyte secondary battery by performing a predetermined process starting from reduction with metallic magnesium (Mg).
The present disclosure may cover the following embodiments.

[1] A negative electrode active material for a nonaqueous electrolyte secondary battery, including porous composite particles containing silicon and silicon oxide ($SiO_x$, $0 < x \leq 2$),
wherein the pores of the porous composite particles are partially or totally filled with carbon, and the surfaces of the porous composite particles are partially or totally coated with carbon.
[2] The negative electrode active material as defined in [1], wherein the porous composite particles further contain magnesium silicon oxide.
[3] The negative electrode active material as defined in [2], wherein the magnesium silicon oxide includes at least one of $MgSiO_3$ and $Mg_2SiO_4$.
[4] The negative electrode active material as defined in [2], wherein the molar ratio (Si/Mg) of Si atoms to Mg atoms in the negative electrode active material is 10-50.
[5] The negative electrode active material as defined in any one of [1] to [4], wherein the porous composite particles contain no magnesium oxide (MgO) at least on the surfaces thereof.
[6] The negative electrode active material as defined in any one of [1] to [5], wherein the total weight of carbon filling the pores of the porous composite particles and carbon covering the surfaces thereof is 5-20 wt%, based on the porous composite particles.
[7] The negative electrode active material as defined in any one of [1] to [6], wherein the porous composite particles have an average particle diameter of 100 nm to 20 $\mu$m.
[8] A negative electrode, including: a negative electrode current collector, and
a negative electrode active material layer formed on the negative electrode current collector and including the negative electrode active material as defined in any one of [1] to [7].
[9] A nonaqueous electrolyte secondary battery including the negative electrode as defined in [8].
[10] A method for preparing a negative electrode active material for a nonaqueous electrolyte secondary battery, including: a reduction step in which silicon oxide ($SiO_a$, $0 < a \leq 2$) is allowed to react with metallic magnesium (Mg),

an acid treatment step in which the material obtained after the reaction is treated with an acid, and
a carbon deposition step in which carbon is deposited on the material obtained after the acid treatment.

[11] The method as defined in [10], wherein porous composite particles having pores on the surfaces thereof and inside thereof are formed in the acid treatment step.
[12] The method as defined in [11], wherein the pores are partially or totally filled with carbon in the carbon deposition step.
[13] The method as defined in any one of [10] to [12], wherein the molar ratio (Si/Mg) of Si atoms to Mg atoms is 0.1-3 in the reduction step.
[14] The method as defined in any one of [10] to [13], wherein the amount of the acid added per g of the material obtained from the reduction step is 1-100 mmol in the acid treatment step.
[15] The method as defined in any one of [10] to [14], wherein the carbon deposition step is carried out by depositing carbon at 500-900°C.

Advantageous Effects

According to the present disclosure, it is possible to provide a silicon oxide-based negative electrode active material, capable of improving at least one of initial efficiency, battery capacity and cycle characteristics of a nonaqueous electrolyte secondary battery, and a negative electrode, a nonaqueous electrolyte secondary battery and a method for preparing a negative electrode active material.

DESCRIPTION OF DRAWINGS

FIG. 1 is a schematic view illustrating a method for preparing a negative electrode active material according to an embodiment of the present disclosure.
FIG. 2 is a scanning electron microscopic (SEM) image illustrating a cross-sectional surface of the negative electrode active material particles according to Example 5.
FIG. 3 is a map of Si atoms obtained by energy dispersive spectroscopy (EDS) analysis of a cross-sectional surface of the negative electrode active material particles according to Example 5.
FIG. 4 is a map of C atoms obtained by EDS analysis of a cross-sectional surface of the negative electrode active material particles according to Example 5.
FIG. 5 is a map of O atoms obtained by EDS analysis of a cross-sectional surface of the negative electrode active material particles according to Example 5.
FIG. 6 is a map of Mg atoms obtained by EDS analysis of a cross-sectional surface of the negative electrode active material particles according to Example 5.
FIG. 7 is a graph illustrating cycle characteristics of a coin cell according to each of examples and comparative examples.

BEST MODE

Hereinafter, a negative electrode active material, a negative electrode, a nonaqueous electrolyte secondary battery and a method for preparing a negative electrode active material according to an embodiment of the present disclosure will be described. Meanwhile, the following embodiment showing an embodiment of the present disclosure does not limit the present disclosure, and modifications can be made thereto without departing from the scope of the disclosure. In addition, each configuration and each feature of embodiments can be arbitrarily combined.

[Nonaqueous electrolyte secondary battery]

In one aspect of the present disclosure, there is provided a nonaqueous electrolyte secondary battery. The nonaqueous electrolyte secondary battery according to an embodiment of the present disclosure includes a negative electrode, a positive electrode, a separator interposed between the negative electrode and the positive electrode, and a nonaqueous electrolyte. Particular examples of the secondary battery may include lithium-ion secondary batteries having advantages, such as high energy density, discharge voltage and output stability.
Hereinafter, a lithium-ion secondary battery will be mainly described as an example. However, the present disclosure is not limited to a lithium-ion secondary battery and may be applied to various nonaqueous electrolyte secondary batteries.

A lithium-ion secondary battery according to an embodiment of the present disclosure includes a negative electrode, a positive electrode, a separator interposed between the negative electrode and the positive electrode, and a nonaqueous electrolyte. In addition, the lithium-ion secondary battery may optionally include a battery casing configured to receive an electrode assembly including a negative electrode, a positive electrode and a separator, and a sealing member configured to seal the battery casing.

[Negative electrode]

The negative electrode includes a negative electrode current collector and a negative electrode active material layer formed on one surface or both surfaces of the negative electrode current collector. The negative electrode active material layer may be formed totally or merely partially on the surface of the negative electrode current collector.

(Negative electrode current collector)

The negative electrode current collector used for the negative electrode is not particularly limited, as long as it does not cause any chemical change in a battery and has conductivity. Particular examples of the negative electrode current collector may include: copper; stainless steel; aluminum; nickel; titanium; baked carbon; copper or stainless steel surface-treated with carbon, nickel, titanium, silver, etc.; aluminum-cadmium alloy; or the like.

The negative electrode current collector may have a thickness of 3-500 $\mu$m. The negative electrode current collector may have fine surface irregularities formed on the surface thereof to enhance adhesion with the negative electrode active material. For example, the negative electrode current collector may have various shapes, such as a sheet, a foil, a net, a porous body, a foam, a nonwoven body, or the like.

(Negative electrode active material layer)

The negative electrode active material layer may include a negative electrode active material, a binder, a conductive material and optional additives. For example, the negative electrode active material layer may be formed by applying a negative electrode active material slurry containing a mixture of a negative electrode active material, a binder and a conductive material, dissolved or dispersed in a solvent, to a negative electrode current collector and then carrying out drying and pressing, or by laminating a film obtained by casting the negative electrode active material slurry onto another support and peeling the film from the support, onto a negative electrode current collector. If necessary, the mixture may further include a dispersant, a filler or other optional additives.

(Negative electrode active material)

In a lithium-ion secondary battery according to an embodiment of the present disclosure, the negative electrode active material includes porous composite particles containing silicon and silicon oxide ($SiO_x$, $0 < x \leq 2$). In addition, the pores of the porous composite particles are partially or totally filled with carbon, and the surfaces of the porous composite particles are partially or totally coated with carbon. Meanwhile, the negative electrode active material layer may further include a negative electrode active material other than the porous composite particles. As used herein, any material contributing to charge/discharge reactions at a negative electrode is referred to as 'negative electrode active material'.

As used herein, 'coated with carbon' means that external surfaces of particles are at least partially covered physically with carbon. Another material (e.g. another coating layer) may be present between the external surfaces of particles and carbon covering the surfaces. As used herein, 'filled with carbon' means that carbon is present in the pores inside the particles. It is not essentially required that the inner parts of the particles are totally filled with carbon densely, and some parts where the inner walls of the pores are not in contact with carbon may be present. In addition, another material (e.g. a layer covering the inner walls of the pores) may be present between the inner walls of the pores and carbon.

The negative electrode active material may be contained in an amount of 80-99 wt% based on the total weight of the negative electrode active material layer.

(Porous composite particles)

The porous composite particles are those including multiple types of materials and have a plurality of pores therein. However, as described above, the pores of the porous composite particles are partially or totally filled with carbon. Therefore, the porous composite particles may not include actual pores therein (for example, when the pores are totally filled with carbon, the porous composite particles include no pore therein.)

The porous composite particles (except carbon present on the surfaces and in the pores) may be contained in an amount, for example, of 0.1-99 wt%, 1-90 wt%, 5-50 wt%, or 10-30 wt%, based on the total weight of the negative electrode active material.

For example, silicon (Si) and silicon oxide (SiO$_x$) contained in the porous composite particles have a composite structure in which Si microparticles are dispersed in a microcrystalline or amorphous state in a matrix of amorphous silicon oxide (SiO$_x$). In silicon oxide (SiO$_x$), the ratio x of oxygen to silicon satisfies $0 < x \leq 2$, preferably $0.5 \leq x \leq 1.6$, and more preferably $0.8 \leq x \leq 1.5$.

Since silicon (Si) microparticles are capable of lithium intercalation, it may take on charge/discharge reactions at a negative electrode. The silicon oxide matrix surrounding the Si microparticles can alleviate volumetric swelling/shrinking of silicon microparticles following lithium intercalation/deintercalation.

The total content of the silicon phase and silicon oxide phase contained in the porous composite particles is, for example, 50-99 wt%, 60-90 wt%, or 70-80 wt%, based on the total weight of the porous composite particles. When the content is 50 wt% or more, a sufficient level of battery capacity is obtained.

The porous composite particles may further include magnesium silicon oxide. For example, the magnesium silicon oxide includes at least one of MgSiO$_3$ and Mg$_2$SiO$_4$, but is not limited thereto.

The total content of magnesium silicon oxide contained in the porous composite particles is, for example, 0.1-20 wt%, 0.5-10 wt%, or 1-5 wt%, based on the total weight of the porous composite particles. When the content is 0.1 wt% or more, it is likely that magnesium silicon oxide alleviates volumetric swelling of the silicon phase. When the content is 20 wt% or less, it is possible to obtain a sufficient effect of increasing battery capacity through the silicon phase.

When the porous composite particles include magnesium silicon oxide, the molar ratio (Si/Mg) of Si atoms to Mg atoms in the negative electrode active material is, for example 10-50, preferably 15-40, and more preferably 20-30. When the molar ratio is 10 or more, the amount of Si is relatively increased and high energy density can be obtained. When the molar ratio is 50 or less, it is thought that sufficient reduction occurs.

The porous composite particles may further include magnesium oxide (MgO) and/or metallic magnesium (Mg). They may correspond to components remaining after the reduction treatment or acid treatment as described hereinafter. However, preferably, the porous composite particles contains no magnesium oxide (MgO) and/or metallic magnesium (Mg) at least on the surfaces thereof. Herein, 'surfaces' means the surfaces of the porous composite particles located below carbon coating. In other words, 'contains no magnesium oxide (MgO) and/or metallic magnesium (Mg) on the surfaces' means that no magnesium oxide (MgO) and/or metallic magnesium (Mg) exists right below the carbon coating of the porous composite particles. Preferably, the porous composite particles contain no magnesium oxide (MgO) and/or metallic magnesium (Mg) that is in contact with the carbon coating. More preferably, the porous composite particles contain no magnesium oxide (MgO) and/or metallic magnesium (Mg).

The content of magnesium oxide (MgO) contained in the porous composite particles is, for example, 5 wt% or less, 1 wt% or less, 0.1 wt% or less, or 0.01 wt% or less, based on the total weight of the porous composite particles. The content of metallic magnesium (Mg) contained in the porous composite particles is, for example, 5 wt% or less, 1 wt% or less, 0.1 wt% or less, or 0.01 wt% or less, based on the total weight of the porous composite particles.

The porous composite particles may preferably include Si, O and Mg elements. However, the porous composite particles may further include the other ingredients (including inevitable impurities).

The content (total content of Si atoms in all silicon-containing materials, such as a silicon phase, a silicon oxide phase, a magnesium silicon oxide phase, etc.) of silicon atoms contained in the porous composite particles is, for example, 10-90 wt%, 30-80 wt%, or 50-70 wt%, based on the total weight of the porous composite particles.

The content (total content of Mg atoms in all magnesium-containing materials, such as a magnesium silicon oxide phase, a magnesium oxide (MgO) phase, a metallic magnesium (Mg) phase, etc.) of magnesium atoms contained in the porous composite particles is, for example, 0.1-20 wt%, 0.5-10 wt%, or 1-5 wt%, based on the total weight of the porous composite particles.

The porous composite particles have an average particle diameter of, for example, 100 nm to 20 $\mu$m, preferably 200 nm to 15 $\mu$m, and more preferably 500 nm to 10 $\mu$m. As used herein, 'average particle diameter' means a particle diameter at an accumulated value of 50%, i.e. median diameter (D$_{50}$), in a particle size distribution determined by laser diffraction scattering method. The pores may have an irregular cross-sectional shape, and there may be pseudo-spherical pores or elongated (with a large aspect ratio) pores. Although the pores are not limited to any specific size, for example, pseudo-spherical pores may have a size of 1-500 nm, and pores with a large aspect ratio may have a shorter side length of 1-500 nm.

The pores may not be arranged uniformly in the porous composite particles. For example, the pores may be generated by removing components forming a part of the composite particles through the acid treatment as described hereinafter, and the pores inside the particles are connected with the particle surfaces. As a result, the pores inside the particles may be present in a larger amount in the vicinity of the surfaces as compared to the central portions of the particles. However, the arrangement or shapes of the pores may vary depending on the preparation conditions of the porous composite particles, and thus is not limited to the above-mentioned embodiment but may be any arrangement or shapes.

(Carbon deposition to negative electrode active material)

As described above, the surfaces of the porous composite particles are at least partially coated with carbon, and the pores of the porous composite particles are at least partially filled with carbon. Herein, such carbon is collectively referred to as 'deposited carbon.'

The deposited carbon may impart electrical conductivity to the porous composite particles. In addition, since the surfaces of the porous composite particles are coated with the deposited carbon, side reactions of the porous composite particles with another material (e.g. electrolyte) can be inhibited. Further, since the pores of the porous composite particles are filled with carbon, it is possible to reduce the possibility of crack generation based on pores due to volumetric swelling/shrinking of silicon following charge/discharge.

Carbon materials forming the deposited carbon may include: graphite, such as natural graphite, artificial graphite, etc.; carbon fibers, such as mesocarbon microbeads (MCMBs), carbon nanotubes, carbon nanofibers, etc.; carbon black, such as ketjen black, denka black, acetylene black, etc.; graphene or graphene oxide; a mixture thereof; or the like. However, preferred is a coating film or deposited matter using a chemical vapor deposition (CVD) process and acetylene gas or methane gas as a starting material so that even the internal deep pores of the microparticles may be filled.

The content of the deposited carbon formed on the surfaces of the porous composite particles, i.e. total content of carbon filling the pores of the porous composite particles and carbon covering the surfaces thereof is, for example, 5-20 wt%, preferably 6-18 wt%, and more preferably 8-15 wt%, based on the porous composite particles (not including deposited carbon content). When the content is 5 wt% or more, it is thought that filling of the pores with carbon is carried out properly. When the content is 20 wt% or less, a predetermined level or higher battery capacity may be obtained, and aggregation of the porous composite particles among themselves through the deposited carbon may be inhibited. However, the content of carbon is not limited to the above-defined range, and even if the content does not fall within the above-defined range, functions as a secondary battery may be allowed despite slight degradation of battery performance.

The deposited carbon covers, for example, 50-100%, 60-99%, or 70-95% of the surface areas of the porous composite particles (except the pores inside the particles.) The deposited carbon fills, for example, 50-100 vol%, 60-99 vol% or 70-95 vol% of the total volume of the pores inside the porous composite particles.

The deposited carbon formed on the surfaces of the porous composite particles may have an average thickness, for example, of 10 nm to 10 $\mu$m, 50 nm to 5 $\mu$m, 100 nm to 2 $\mu$m or 200 nm to 1 $\mu$m.

(Carbonaceous material)

The negative electrode active material layer may further include a carbonaceous material, as a negative electrode active material other than the porous composite material having deposited carbon. For example, the carbonaceous material may be contained in the negative electrode active material layer in the form of powder.

When the carbonaceous material is contained in the negative electrode active material, it may include any carbonaceous material that may be used generally as a negative electrode active material of a nonaqueous electrolyte secondary battery. Particular examples of the carbonaceous material may include any one selected from natural graphite, artificial graphite, graphitized carbon fibers and amorphous carbon, or a mixture of two or more of them, but are not limited thereto. A composite with an element other than carbon may be used. Meanwhile, the carbonaceous material may be any one of low crystalline carbon and high crystalline carbon. The low crystalline carbon typically includes soft carbon and hard carbon, and the high crystalline carbon typically includes irregular, sheet-like, scaly, spherical or fibrous natural graphite or artificial graphite, kish graphite, pyrolyzed carbon, mesophase pitch-based carbon fibers, mesocarbon microbeads, mesophase pitch, high-temperature baked carbon, such as petroleum/coal-based cokes.

When the negative electrode active material further includes a carbonaceous material in addition to the porous composite particles, the weight ratio of the porous composite particles to the carbonaceous material in the negative electrode active material may be, for example, 1:99-50:50, preferably 5:95-30:80, and more preferably 8:92-20:80.

(Binder)

The binder is added as a component accelerating binding between an active material and a conductive material or binding with a current collector, or the like. Particular examples of the binder may include, but are not limited to: polyvinylidene fluoride (PVDF), polyvinyl alcohol (PVA), polyacrylonitrile, carboxymethyl cellulose (CMC), starch, hydroxypropyl cellulose, regenerated cellulose, polyvinyl pyrrolidone, polytetrafluoroethylene, polyethylene, polypropylene, ethylene-propylene-diene monomer (EPDM), sulfonated EPDM, styrene-butadiene rubber (SBR), polyacrylic acid, polyacrylamide, polyimide, fluoro-rubber, various copolymers thereof, or the like, and such binder materials may be used alone or in combination.

The content of the binder may be, for example, 0.1-30 wt%, based on the total weight of the negative electrode active material layer. The content of the binder is preferably 0.5-20 wt%, and more preferably 1-10 wt%. When the content of the binder satisfies the above-defined range, it is possible to impart sufficient adhesion in the electrode while preventing degradation of battery capacity characteristics.

(Conductive material)

The conductive material is not particularly limited, as long as it is an electrically conductive material causing no chemical change. Particular examples of the conductive material may include, but are not limited to: carbonaceous materials, such as artificial graphite, natural graphite, single-walled carbon nanotubes, multi-walled carbon nanotubes, graphene, carbon black, acetylene black, ketjen black, denka black, thermal black, channel black, furnace black, lamp black or carbon fibers; metal powder or metal fibers, such as aluminum, tin, bismuth, silicon, antimony, nickel, copper, titanium, vanadium, chromium, manganese, iron, cobalt, zinc, molybdenum, tungsten, silver, gold, lanthanum, ruthenium, platinum or iridium; conductive whisker, such as zinc oxide or potassium titanate; conductive metal oxide, such as titanium oxide; a conductive polymer, such as polyaniline, polythiophene, polyacetylene, polypyrrole, polyphenylene derivatives; or the like, and such conductive materials may be used alone or in combination.

The content of the conductive material may be 0.1-30 wt% based on the total weight of the negative electrode active material layer. The content of the conductive material may be preferably 0.5-15 wt%, and more preferably 0.5-10 wt%. When the content of the conductive material satisfies the above-defined range, there are advantages in that sufficient conductivity can be provided, and battery capacity can be ensured because the content of the negative electrode active material is not reduced.

(Thickener)

A negative electrode active material slurry in applying a negative electrode active material to a negative electrode current collector may include a thickener. Specifically, the thickener may be a cellulose-based compound, such as carboxymethyl cellulose (CMC). The thickener may be contained, for example, in an amount of 0.5-10 wt% based on the total weight of the negative electrode active material layer.

(Solvent)

A solvent used in the negative electrode active material slurry is not particularly limited, as long as it is one used for manufacturing a negative electrode. Particular examples of the solvent may include N-methyl-2-pyrrolidone (NMP), dimethyl sulfoxide (DMSO), isopropyl alcohol, acetone, water, or the like, but are not limited thereto, and such solvents may be used alone or in combination.

[Method for manufacturing negative electrode]

A method for manufacturing a negative electrode for a lithium-ion secondary battery according to an embodiment of the present disclosure includes the steps of:

(1) preparing a negative electrode active material
(2) preparing a negative electrode active material slurry from the negative electrode active material
(3) manufacturing a negative electrode from the negative electrode active material slurry

(1) A negative electrode active material is prepared.

When step (1) of preparing a negative electrode active material is further divided as 'method for preparing a negative electrode active material', it includes the following steps of:

(a) a reduction step: silicon oxide ($SiO_a$, $0 < a \leq 2$) is allowed to react with metallic magnesium (Mg)
(b) an acid treatment step: the material obtained after the reaction of (a) is treated with an acid.
(c) a carbon deposition step: carbon is deposited on the material obtained after the acid treatment of (b).

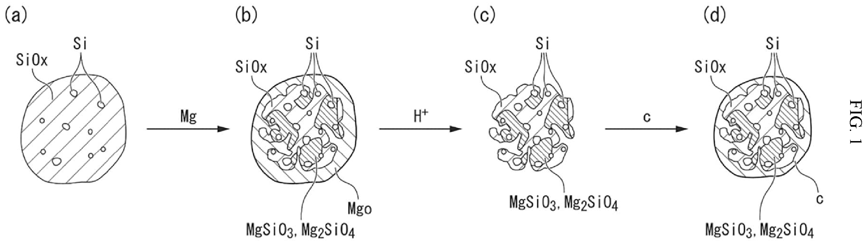

FIG. 1 is a schematic view illustrating a method for preparing a negative electrode active material according to an embodiment of the present disclosure. Hereinafter, the method will be explained with reference to FIG. 1, but FIG.1 is merely a schematic view facilitating understanding of the present disclosure and does not precisely show a microscopic state of actual particles.

(a) Reduction step

In the reduction step, metallic magnesium (Mg) functions as a reducing agent. Specifically, it is thought that the following chemical reaction proceeds between silicon oxide ($SiO_a$) and metallic magnesium (Mg).

$$SiO_a + aMg \rightarrow Si + aMgO$$

Silicon oxide used as a starting material may be powder of $SiO_a$ ($0 < a \leq 2$). For example, as shown in (a) of FIG. 1, $SiO_a$ may have a structure in which Si microparticles are dispersed in an amorphous silicon oxide matrix in a microcrystalline or amorphous state. Meanwhile, in the above description of the porous composite particles, the Si microparticles and silicon oxide ($SiO_x$) matrix are marked separately for convenience, but herein, the Si microparticles and silicon oxide matrix are collectively referred to as silicon oxide ($SiO_a$). In other words, a is an average value of the whole Si microparticles and silicon oxide matrix. Herein, $0 < a \leq 2$, preferably $0.5 \leq a \leq 1.6$, and more preferably $0.8 \leq a \leq 1.5$. For example, silicon oxide of the starting material may be silicon monoxide (SiO) (a = 1) or silicon dioxide ($SiO_2$) (a = 2). In addition, silicon oxide powder of the starting material may include only $SiO_a$ having a specific a value, or may be a mixture of two types or more $SiO_a$ powder having a different a value.

The silicon oxide particles of the starting material may have an average particle diameter, for example, of 100 nm to 20 μm, preferably 200 nm to 10 μm, and more preferably 500 nm to 5 μm or 500 nm to 1 μm. When the average particle diameter is small, reactive sites of charge/discharge reactions are relatively increased advantageously to provide the possibility of increasing battery capacity, and lithium-ion intercalation/deintercalation is facilitated in the particles to provide improved battery life characteristics. When the average particle diameter is 100 nm or more, it is possible to ensure a sufficient specific surface area of the porous composite particles, to realize suitable reactivity with an electrolyte and to increase battery energy density to a certain degree. When the average particle diameter is 20 μm or less, it is possible to inhibit degradation of life characteristics caused by volumetric swelling.

In the reduction step, the molar ratio (Si/Mg) of Si atoms to Mg atoms is 0.1-3, preferably 0.3-2.5, more preferably 0.5-2, even more preferably 0.6-1.8, and even further more preferably 0.8-1.5. When the molar ratio is 0.1 or more, a predetermined amount of Si that becomes charge/discharge reaction sites is contained, and thus a certain degree of energy density can be obtained. When the molar ratio is 3 or less, sufficient reduction occurs, and thus battery capacity is improved sufficiently.

In addition to the above, silicon oxide may react with metallic magnesium (Mg) or magnesium oxide (MgO) produced as mentioned above to produce magnesium silicon oxide as a byproduct. Particular examples of the magnesium silicon oxide may include $MgSiO_3$, $Mg_2SiO_4$, etc.

The reaction condition is any reaction condition, as long as the reaction proceeds. In terms of simple treatment, a method of mixing and heating silicon oxide powder and metallic magnesium (Mg) powder is preferred, but the reaction condition is not limited thereto and the materials may be allowed to react, for example, in a solution. Since reduction is carried out, it is performed preferably under inert gas atmosphere (e.g. nitrogen, argon, etc.) or reductive atmosphere. The reaction temperature is for example 500-1,000°C, preferably 600-900°C, more preferably 650-850°C, and even more preferably 700-800°C. The reaction pressure is not specifically limited. The reaction time is for example 10 minutes to 3 hours, preferably 30 minutes to 2 hours.

For example, it is supposed that the reduction proceeds according to the following mechanism. However, the following is merely a supposition and it is not intended that the present disclosure is bound to a theory.

The silicon oxide particles of the starting material reacts with metallic magnesium (Mg), and thus Si microparticles in the silicon oxide matrix are increased. Simultaneously, magnesium oxide (MgO) or magnesium silicon oxide is produced. As a result, as shown in (b) of FIG. 1, it is possible to obtain composite particles in which silicon oxide ($SiO_x$) including silicon microparticles dispersed in a silicon oxide matrix, magnesium oxide (MgO), magnesium silicon oxide and unreacted metallic magnesium (Mg) are integrated and/or aggregated.

(b) Acid treatment step

In the acid treatment step, magnesium oxide produced in the reduction step and unreacted metallic magnesium (Mg) react with protons to produce magnesium ions ($Mg^{2+}$). magnesium ions ($Mg^{2+}$) can be removed by washing with water, and as a result, magnesium oxide and unreacted metallic magnesium (Mg) can be removed.

$$MgO + 2H^+ \rightarrow Mg^{2+} + H_2O$$

$$Mg^{2+} + 2H^+ \rightarrow Mg^{2+} + H_2$$

The acid treatment step includes adding an acid to the product of the reduction step. For example, the acid is an aqueous acid solution. For example, the aqueous acid solution is an aqueous solution of strong acid. The strong acid may be an inorganic acid or an organic acid, and particular examples thereof may include hydrochloric acid, nitric acid, sulfuric acid, hydrogen bromide, hydrogen iodide, sulfonic acid, or the like. Such acids may be used in any combination. In other words, the acid treatment step may include a step of allowing the material obtained after the reduction step to react with at least one acid selected from the group consisting of hydrochloric acid, nitric acid, sulfuric acid, hydrogen bromide, hydrogen iodide and sulfonic acid. For example, when using hydrochloric acid, the following chemical reaction occurs between magnesium oxide (MgO)/metallic magnesium (Mg) and hydrochloric acid.

$$MgO + 2HCl \rightarrow MgCl_2 + H_2O$$

$$Mg + 2HCl \rightarrow MgCl_2 + H_2$$

The acid may not include any one (e.g. hydrogen fluoride (HF)) capable of dissolving silicon oxide ($SiO_x$) strongly.

The aqueous acid solution has a concentration, for example, of 0.1-10 M, preferably 0.5-5 M. When the concentration is 0.1 M or higher, impurities can be removed sufficiently. When the concentration is 10 M or lower, sufficient production efficiency can be maintained. The amount of the aqueous acid solution added per g of the composite particles obtained from the reduction step is, for example, 1-100 mL, preferably 5-80 mL, and more preferably, 10-50 mL. When the concentration of the aqueous acid solution is 1 M, the molar amount of the acid added per g of the composite particles is, for example, 1-100 mmol, preferably 5-80 mmol, and more preferably 10-50 mmol.

The reaction condition is any reaction condition, as long as the reaction proceeds. The reaction temperature is for example 10-90°C, preferably room temperature to 50°C. The reaction pressure is not specifically limited. The reaction time is for example 1-48 hours, preferably 6-36 hours, and more preferably 12-30 hours.

For example, it is supposed that the acid treatment of the composite particles proceeds according to the following mechanism. However, the following is merely a supposition and it is not intended that the present disclosure is bound to a theory.

The acid that becomes in contact with the composite particles after the reduction step reacts first with magnesium oxide (MgO) or metallic magnesium (Mg) present on or in the vicinity of the surfaces of the composite particles. After the elution of the magnesium oxide (MgO) or metallic magnesium (Mg) that has reacted with the acid from the composite particles, pores are formed at portions where the magnesium oxide (MgO) or metallic magnesium (Mg) is released from the composite particles. The acid enters the pores and react with magnesium oxide (MgO) or metallic magnesium (Mg) present inside the particles. In this manner, magnesium oxide (MgO) or metallic magnesium (Mg) in the composite particles are decomposed and removed. After the acid treatment, pores are formed in the composite particles, and thus as shown in (c) of FIG. 1, porous composite particles having pores therein are obtained.

Since magnesium silicon oxide has low reactivity with an acid, it remains at least partially even after the acid treatment, but it is likely that magnesium silicon oxide may be partially or totally decomposed depending on starting materials, acids and reaction conditions to be used.

After carrying out a reaction by adding an acid, matters dissolved in the acid can be removed by conventional washing. After carrying out washing and drying steps, a porous composite material can be obtained.

(c) Carbon deposition step

In the carbon deposition step, carbon is deposited on the resultant porous composite particles, so that the surfaces of the porous composite particles are coated with carbon and the inner parts of the pores of the porous composite particles are filled with carbon. The carbon deposition treatment may be carried out by any carbon deposition process used generally in the art, and the carbon deposition process is not specifically limited. The carbon deposition process may be any one of a dry process and a wet process. The dry process may be exemplified by a method of depositing carbon on a porous composite material through chemical vapor deposition (CVD), or the like. The wet process may be exemplified by a method of mixing and heating a carbon source with a porous composite material in a solution, or the like.

For example, when carrying out carbon deposition, such as CVD, it may be carried out preferably at a relatively low temperature for a long time so that the inner parts of the pores may be sufficiently filled with carbon. For example, the carbon deposition temperature is 500-900°C, preferably 600-800°C. For example, the carbon deposition time is 10 minutes to 24 hours, preferably 30 minutes to 10 hours, and more preferably 30 minutes to 2 hours.

Since deposited carbon layers are formed on the surfaces and in the internal pores of the porous composite particles, the porous composite particles may be imparted with electrical conductivity and the surfaces thereof may be protected, thereby improving at least one of battery capacity, initial efficiency and cycle characteristics.

Through the carbon deposition, as shown in (d) of FIG. 1, the surfaces of the porous composite particles are partially or totally coated with carbon and the pores inside of the particles are partially or totally filled with carbon. In this manner, the porous composite particles including deposited carbon formed therein are used as a negative electrode active material.

Meanwhile, in the method for preparing a negative electrode active material according to this embodiment, the pores are formed by themselves when magnesium oxide (MgO) and metallic magnesium (Mg) are removed through the acid treatment step with no need for a step of actively forming pores in the composite material. For example, the method for preparing a negative electrode active material according to this embodiment includes no conventional pore-forming step (e.g. a step of depositing a target material in a vapor state on a metal plate.)

(2) A negative electrode active material slurry is prepared from the negative electrode active material.

A solvent is added to the negative electrode active material obtained from (1). Herein, if necessary, a conductive material, a binder, a thickener, etc. may be added. The negative electrode active material, the conductive agent, the binder, the thickener, etc. are dissolved or dispersed in the solvent to obtain a negative electrode active material slurry.

(3) A negative electrode is obtained from the negative electrode active material slurry.

The negative electrode active material slurry is applied to a negative electrode current collector, and drying and pressing are carried out. In this manner, a negative electrode including a negative electrode active material layer formed on the negative electrode current collector can be obtained.

In a variant, for example, the negative electrode active material slurry may be casted on another support, and then a film obtained by peeling it from the support may be laminated on the negative electrode current collector to obtain a negative electrode. In addition, other methods may be used to form a negative electrode active material layer on the negative electrode current collector.

[Positive electrode]

In a lithium-ion secondary battery according to an embodiment of the present disclosure, the positive electrode includes a positive electrode current collector and a positive electrode active material layer formed on one surface or both surfaces of the positive electrode current collector. The positive electrode active material layer may be formed totally or partially on the surface of the positive electrode current collector.

(Positive electrode current collector)

The positive electrode current collector used for the positive electrode is not particularly limited, as long as it does not cause any chemical change in a battery and has conductivity. Particular examples of the positive electrode current collector may include: stainless steel; aluminum; nickel; titanium; baked carbon; aluminum or stainless steel surface-treated with carbon, nickel, titanium, silver, etc.; or the like.

The positive electrode current collector may have a thickness of 3-500 $\mu$m. The positive electrode current collector may have fine surface irregularities formed on the surface thereof to enhance adhesion with the positive electrode active material. For example, the positive electrode current collector may have various shapes, such as a sheet, a foil, a net, a porous body, a foam, a nonwoven body, or the like.

(Positive electrode active material layer)

For example, the positive electrode active material layer may be formed by applying a positive electrode active material slurry in which a mixture of a positive electrode active material, a conductive agent and a binder is dissolved and dispersed in a solvent to a positive electrode current collector, and carrying out drying and pressing. If necessary, the mixture may further include a dispersant or a filler, or other optional additives.

The positive electrode active material may be contained in an amount of 80-99 wt% based on the total weight of the positive electrode active material layer.

(Positive electrode active material)

As a positive electrode active material, a compound capable of reversible lithium intercalation/deintercalation may be used. Particular examples of the compound may include lithium metal composite oxides containing lithium and at least one metal, such as cobalt, manganese, copper, vanadium, aluminum, etc. More specifically, such lithium metal composite oxides may include: lithium-manganese oxides (e.g. $LiMnO_2$, $LiMnO_3$, $LiMn_2O_3$, $LiMn_2O_4$, etc.); lithium-cobalt oxides (e.g. $LiCoO_2$, etc.); lithium-nickel oxides (e.g., $LiNiO_2$, etc.); lithium-copper oxides (e.g. $Li_2CuO_2$, etc.); lithium-vanadium oxides (e.g. $LiV_3O_8$, etc.); lithium-nickel-manganese oxides (e.g., $LiNi_{1-z}Mn_zO_2$ (wherein $0 < z < 1$), $LiMn_{2-z}Ni_zO_4$ (wherein $0 < z < 2$)); lithium-nickel-cobalt oxides (e.g., $LiNi_{1-y}Co_yO_2$(wherein $0 < y < 1$)); lithium-manganese-cobalt oxides (e.g., $LiCo_{1-z}Mn_zO_2$ (wherein $0 < z < 1$), $LiMn_{2-y}Co_yO_4$ (wherein $0 < y < 2$)); lithium-nickel-manganese-cobalt oxides (e.g., $Li(Ni_xCo_yMn_z)O_2$ ($0 < x < 1$, $0 < y < 1$, $0 < z < 1$, $x + y + z = 1$) or $Li(Ni_xCo_yMn_z)O_4$ ($0 < x < 2$, $0 < y < 2$, $0 < z < 2$, $x + y + z = 2$)); lithium-nickel-cobalt-metal (M) oxides (e.g., $Li(Ni_xCo_yMn_zM_w)O_2$ (wherein M is selected from the group consisting of Al, Fe, V, Cr, Ti, Ta, Mg and Mo, and $0 < x < 1$, $0 < y < 1$, $0 < z < 1$, $0 < w < 1$, and $x + y + z + w = 1$)); those compounds in which the transition metal elements are partially substituted with at least one metal element; or the like. The positive electrode active material layer may include any one compound, or two or more compounds of them. However, the scope of the present disclosure is not limited thereto.

Particularly, in terms of improvement of battery capacity characteristics and stability, preferred are $LiCoO_2$, $LiMnO_2$, $LiMn_2O_4$, $LiNiO_2$, lithium nickel manganese cobalt oxides (e.g. $Li(Ni_{1/3}Mn_{1/3}Co_{1/3})O_2$, $Li(Ni_{0.6}Mn_{0.2}Co_{0.2})O_2$, $Li(Ni_{0.4}Mn_{0.3}Co_{0.3})O_2$, $Li(Ni_{0.5}Mn_{0.3}Co_{0.2})O_2$, $Li(Ni_{0.7}Mn_{0.15}Co_{0.15})O_2$, $Li(Ni_{0.8}Mn_{0.1}Co_{0.1})O_2$, etc.), lithium nickel cobalt aluminum oxides (e.g. $Li(Ni_{0.8}Co_{0.15}Al_{0.05})O_2$, etc.), or the like.

(Binder and conductive material)

The type and content of the binder and the conductive material used in the positive electrode active material slurry may be the same as those described for the negative electrode.

(Solvent)

The solvent used for the positive electrode active material slurry is not particularly limited, as long as it is used conventionally for preparing a positive electrode. Particular examples of the solvent include, but are not limited to: amine-based solvents, such as N,N-dimethylaminopropylamine, diethylene triamine, N,N-dimethyl formamide (DMF), or the like; ether-based solvents, such as tetrahydrofuran; ketone-based solvents, such as methyl ethyl ketone; ester-based solvents, such as methyl acetate; amide-based solvents, such as dimethyl acetamide, N-methyl-2-pyrrolidone (NMP), or the like; dimethyl sulfoxide (DMSO); water; or the like. Such solvents may be used alone or in combination.

The solvent may be used in such an amount that it allows dissolution or dispersion of the positive electrode active material, the conductive material and the binder therein, and provides a viscosity capable of realizing excellent thickness uniformity upon the application to the positive electrode current collector, considering the slurry coating thickness or production yield.

[Method for manufacturing positive electrode]

The method for preparing a positive electrode for a lithium-ion secondary battery according to an embodiment of the present disclosure may include the steps of: dissolving or dispersing a positive electrode active material optionally with a binder, a conductive material, a thickener, etc. in a solvent to obtain a positive electrode active material slurry; and forming a positive electrode active material layer on a positive electrode current collector, for example, by applying the positive electrode active material slurry onto a positive electrode current collector, similarly to the method for manufacturing a negative electrode, to obtain a positive electrode.

[Separator]

In a lithium-ion secondary battery according to an embodiment of the present disclosure, the separator functions to separate the negative electrode and the positive electrode from each other and to provide a lithium-ion migration channel. Any separator may be used with no particular limitation, as long as it is used conventionally as a separator for a lithium-ion secondary battery. Particularly, the separator preferably shows low resistance against electrolyte ion migration and high wettability with an electrolyte. Particular examples of the separator may include a porous polymer film, such as a porous polymer film made of a polyolefin-based polymer, including ethylene homopolymer, propylene homopolymer, ethylene/butene copolymer, ethylene/hexene copolymer or ethylene/methacrylate copolymer, or a laminate having two or more layers of such porous polymer films. In addition, a conventional porous nonwoven web, such as a nonwoven web made of high-melting point glass fibers, polyethylene terephthalate fibers, or the like, may be used. Further, a separator coated with a ceramic component or polymer material in order to ensure heat resistance or mechanical strength may be used.

[Nonaqueous electrolyte]

In a nonaqueous electrolyte secondary battery according to an embodiment of the present disclosure, the nonaqueous electrolyte may include an organic liquid electrolyte, an inorganic liquid electrolyte, a solid electrolyte, or the like, which may be used for manufacturing a secondary battery, but is not limited thereto.

The nonaqueous electrolyte may include an organic solvent and a lithium salt, and may further include additives, if necessary. Hereinafter, the liquid electrolyte is also referred to as 'electrolyte solution'.

The organic solvent is not particularly limited, as long as it can function as a medium through which ions participating in the electrochemical reactions of a battery can migrate. Particular examples of the organic solvent include, but are not limited to: ester-based solvents, such as methyl acetate, ethyl acetate, γ-butyrolactone and ε-caprolactone; ether-based solvents, such as dibutyl ether and tetrahydrofuran; ketone-based solvents, such as cyclohexanone; aromatic hydrocarbon-based solvents, such as benzene and fluorobenzene; carbonate-based solvents, such as dimethyl carbonate (DMC), diethyl carbonate (DEC), methyl ethyl carbonate (MEC), ethyl methyl carbonate (EMC), ethylene carbonate (EC) and propylene carbonate (PC); alcohol-based solvents, such as ethyl alcohol and isopropyl alcohol; nitrile-based solvents, such as R-CN (wherein R is a C2-C20 linear, branched or cyclic hydrocarbon group, which may optionally include a double bonded aromatic ring or ether bond); amide-based solvents, such as dimethyl formamide; dioxolane-based solvents, such as 1,3-dioxolan; sulfolane-based solvents, or the like. Such solvents may be used alone or in combination.

The lithium salt is not particularly limited, as long as it is a compound capable of providing lithium ions used in a lithium-ion secondary battery. Particular examples of the lithium salt may include, but are not limited to: $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, LiCl, LiI, $LiB(C_2O_4)_2$, or the like. Such lithium salts may be used alone or in combination. For example, the lithium salt may be present in the electrolyte at a concentration of 0.1-2 mol/L. When the concentration of the lithium salt falls within the above-defined range, the electrolyte has suitable conductivity and viscosity and shows excellent electrolyte quality, and thus lithium ions can migrate effectively.

Additives may be used optionally in order to improve battery life characteristics, to inhibit degradation of battery capacity and to improve battery discharge capacity. Particular examples of the additives may include, but are not limited to: haloalkylene carbonate-based compounds, such as fluoroethylene carbonate (FEC) and difluoroethylene carbonate (DFEC); pyridine; triethyl phosphite; triethanolamine; cyclic ethers; ethylene diamine; n-glyme; triamide hexaphosphate; nitrobenzene derivatives; sulfur; quinonimine dyes; N-substituted oxazolidinone; N,N-substituted imidazolidine; ethylene glycol diallyl ether; ammonium salts; pyrrole; 2-methoxyethanol; aluminum trichloride, or the like. Such additives may be used alone or in combination. The additives may be used in an amount of 0.1-15 wt% based on the total weight of the electrolyte.

[Method for manufacturing nonaqueous electrolyte secondary battery]

A nonaqueous electrolyte secondary battery according to an embodiment of the present disclosure can be manufactured by interposing a separator (e.g. separator membrane) and an electrolyte between the negative electrode obtained as described above and the positive electrode obtained as described above. More particularly, the separator may be disposed between the negative electrode and the positive electrode to form an electrode assembly, introduce the electrode assembly to a battery casing, such as a cylindrical battery casing or prismatic battery casing, and inject the electrolyte thereto to obtain a nonaqueous electrolyte secondary battery. In a variant, a product obtained by stacking the electrode assemblies and dipping the resultant stack in the electrolyte may be introduced to and sealed in a battery casing to obtain a nonaqueous electrolyte secondary battery.

The battery casing may be selected from those used conventionally in the art. For example, the battery casing may have a shape, such as a cylindrical shape using a can, a pouch-like shape or a coin-like shape.

The lithium-ion secondary battery according to an embodiment of the present disclosure may be used not only as a power source of a small-scale device but also as a unit battery of a medium- to large-scale battery module including a plurality of battery cells, etc. Preferred examples of such a medium- to large-scale device may include, but are not limited to: electric vehicles, hybrid electric vehicles, plug-in hybrid electric vehicle, electric power storage systems, or the like.

[Effects]

Recently, use of silicon-based materials in negative electrodes has been examined frequently in order to provide lithium-ion secondary batteries with high capacity. However, pure silicon (Si) causes disconnection of an electron conduction path due to cracking generated by swelling during charge, resulting in significant degradation of life characteristics. Therefore, a negative electrode active material including graphite mixed with a small amount of silicon monoxide has been commercialized. Silicon monoxide has a composite structure in which Si phases are dispersed in a matrix of $SiO_x$ phases functioning to alleviate swelling of Si. However, when using silicon monoxide (SiO), a lithium silicate phase formed upon the initial charge of a battery is generated irreversibly to cause a significant drop in discharge capacity as compared to charge capacity, and thus the initial efficiency is significantly low, 65-70%. For this reason, when the amount of silicon monoxide (SiO) is increased, it is difficult to make a balance with the initial efficiency of a positive electrode material.

To solve the above-mentioned problem, $SiO_x$ materials pre-doped with Li have been suggested. However, since lithium silicate phases of various compositions are formed depending on doping amount, there are cases in which capacity is lowered, Si is eluted by an alkaline slurry to generate gases, or viscosity increases. For this reason, even though no problem exists in processability of manufacturing batteries in a laboratory scale, there are problems in that coating is not allowed in a mass production scale, or pinholes are formed after drying electrodes even if coating is allowed, and thus such materials still have a difficulty in commercialization.

According to the negative electrode active material according to an embodiment of the present disclosure, the amount of silicon (Si) contributing to providing high capacity can be increased by reducing silicon oxide in a starting material, while electrical conductivity can be imparted to porous composite particles by depositing carbon on the surfaces or in the pores (remaining after removing MgO or Mg phases) of the porous composite particles, and side reactions between the porous composite particles and an electrolyte can be inhibited. In this manner, battery capacity, charge-/discharge efficiency and cycle characteristics can be improved. In addition, since all of the materials forming the porous composite particles are stable to water, there is an advantage in that gas generation occurring in the related art is prevented.

When the negative electrode active material contains magnesium silicon oxide, magnesium silicon oxide functions as a matrix of Si together with silicon oxide ($SiO_x$) phases, and thus volumetric swelling of Si can be alleviated. Therefore, cycle characteristics can be further improved.

<u>MODE FOR DISCLOSURE</u>

Hereinafter, examples and comparative examples will be described. However, the present disclosure is not limited thereto. In addition, the discussion as described hereinafter is merely exemplary supposition to assist understanding of the present disclosure and is not intended to limit the present disclosure.

[Example 1]

(Preparation of negative electrode active material)

Silicon monoxide (SiO) powder having an average particle diameter of 5 $\mu$m and metallic magnesium (Mg) powder having an average particle diameter of 300 $\mu$m were mixed at a weight ratio of 1:1. The resultant mixture was introduced to a plasma sintering system (available from Microphase), and reduction of SiO powder with Mg powder was carried out by allowing the mixture to stand under inert gas atmosphere at 800°C for 1 hour. After carrying out X-ray diffractometry (XRD) determination and elemental analysis, it is shown that the product contains silicon (Si), silicon oxide ($SiO_x$, $0 < x \leq 1$), metallic magnesium (Mg), magnesium oxide (MgO) and magnesium silicon oxide ($MgSiO_3$, $Mg_2SiO_4$).

Then, 10 g of the product was introduced to 200 mL of 2 M hydrochloric acid and agitated for 24 hours to remove Mg phases and MgO phases. After that, the resultant product was washed with water and dried. Then, chemical vapor deposition (CVD) treatment using ethylene gas was carried out while rotating a furnace core tube at 800°C. It was shown that the product after the CVD treatment contains 7 wt% of carbon as determined from the weight ratio before and after the CVD treatment. The particles were pulverized suitably and subjected to sieving to an average particle diameter of 8 $\mu$m to control the particle size, so that a negative electrode active material was obtained.

(Manufacture of coin cell)

The negative electrode active material obtained as described above, aqueous dispersion (solid content 0.4%) of carbon black (CB) and single-walled carbon nanotubes (SWCNTs) as a conductive material, styrene butadiene rubber (SBR) as a binder and carboxymethyl cellulose (CMC) as a thickener were prepared at a weight ratio of 88.8:3.3:0.25:3.65:4.0. First, the negative electrode material, CB and CMC were mixed, and SWCNT dispersion and water were added thereto, followed by kneading. Finally, SBR was added thereto, followed by mixing, so that a negative electrode active material slurry was prepared.

The resultant slurry was applied uniformly to copper foil, vacuum drying was carried out at 110°C for 10 hours, the resultant product was cut into a circle having a diameter of 13 mm, and a 2016 type coin cell using lithium metal as a counter electrode was manufactured.

[Example 2]

A negative electrode active material was prepared and a coin cell was manufactured in the same manner as Example 1, except that the concentration of hydrochloric acid based on the reduced product was twice that of Example 1 and that washing with water was carried out five times.

[Example 3]

A negative electrode active material was prepared and a coin cell was manufactured in the same manner as Example 2, except that the weight ratio of silicon monoxide (SiO) powder to magnesium (Mg) powder was 2:1.

[Example 4]

A negative electrode active material was prepared and a coin cell was manufactured in the same manner as Example 2, except that the weight ratio of silicon monoxide (SiO) powder to magnesium (Mg) powder was 4:1.

[Example 5]

A negative electrode active material was prepared and a coin cell was manufactured in the same manner as Example 3, except that the amount of carbon to be coated in the CVD treatment was increased to 11 wt%.

[Example 6]

A negative electrode active material was prepared and a coin cell was manufactured in the same manner as Example 3, except that silicon monoxide (SiO) powder having an average particle diameter of 1 $\mu$m was used as a starting material.

[Example 7]

A negative electrode active material was prepared and a coin cell was manufactured in the same manner as Example 6, except that the temperature in the reduction using metallic magnesium (Mg) was changed from 800°C to 680°C.

[Comparative example 1]

A negative electrode active material was prepared and a coin cell was manufactured in the same manner as Example 1, except that 5 wt% of carbon was deposited on the same silicon oxide (SiO) powder as used in Example 1 and the resultant product was used as a negative electrode active material.

[Test Example 1: SEM observation and EDS analysis]

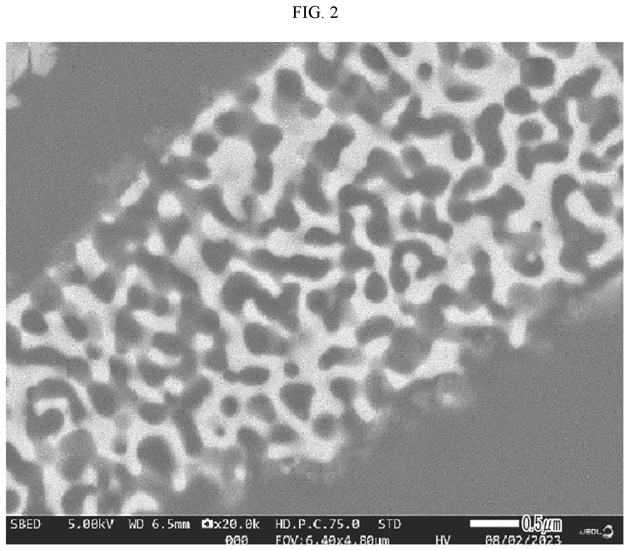

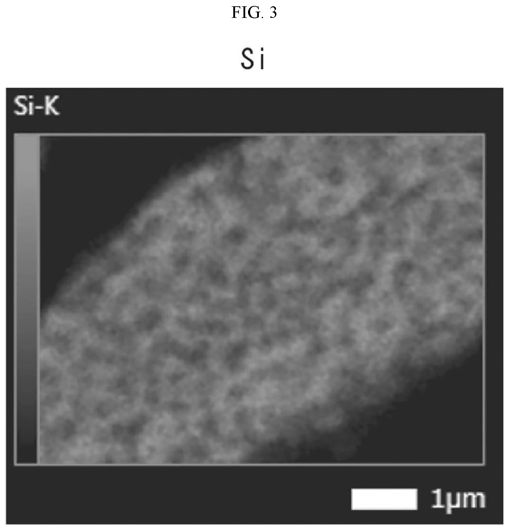

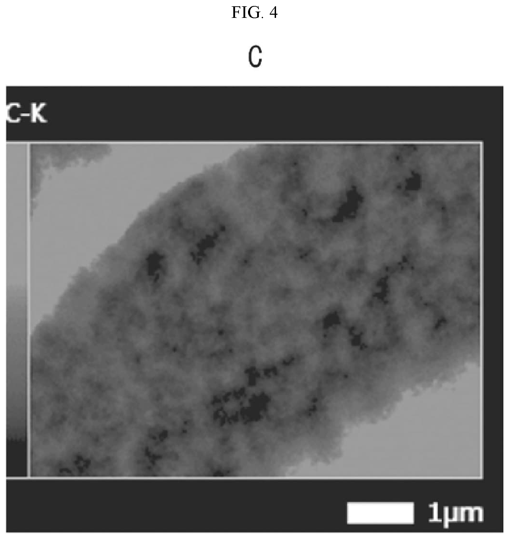

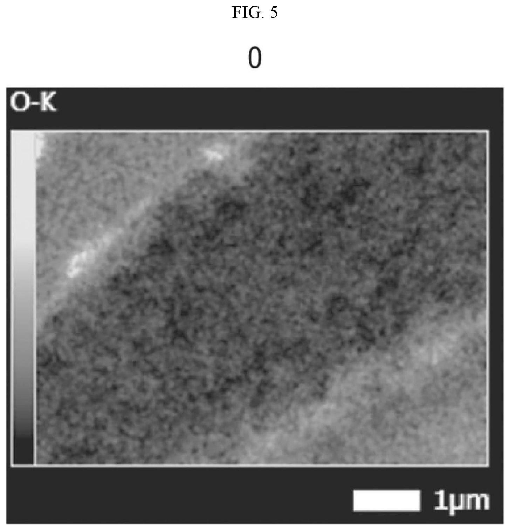

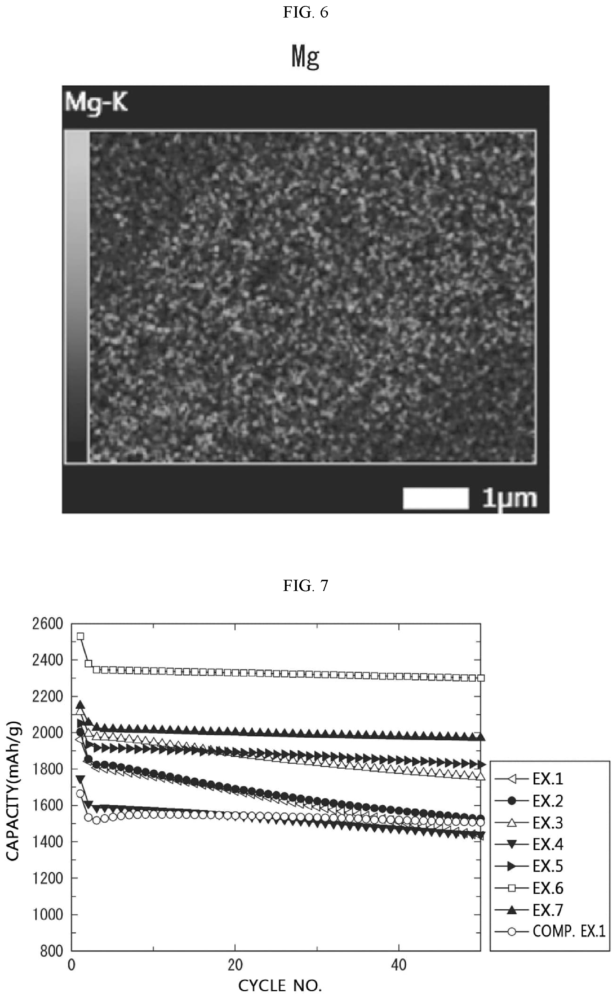

The negative electrode active material particles obtained from Example 5 was observed with a scanning electron microscope (SEM) capable of energy dispersive X-ray spectroscopy (EDS). FIG. 2 is an SEM image illustrating a cross-sectional surface of the negative electrode active material particles according to Example 5. FIG. 3 to FIG. 6 show maps of Si atoms, C atoms, O atoms and Mg atoms, respectively, obtained by EDS analysis of the cross-sectional surface of the negative electrode active material particles according to Example 5. In FIG. 3 to FIG. 6, target atoms exist in white portions. In light-colored portions of FIG. 2, silicon (Si) and silicon oxide ($SiO_x$) are located mainly. Meanwhile, dark-colored portions correspond to pores generated from acid treatment, and thus it is thought that carbon (C) or magnesium silicon oxide are located therein mainly. When comparing FIG. 3 (Si map) with FIG. 4 (C map), it is thought that a large amount of C exists in portions in which Si does not exist. When comparing FIG. 3 (Si map) with FIG. 6 (Mg map), Mg is dispersed throughout the particles. Considering that MgO and Mg are removed through acid treatment, it is thought that magnesium silicon oxide is dispersed throughout the particles. Meanwhile, the upper left zone and lower right zone of each image corresponds to a matrix resin. The following was determined from the SEM image and EDS results.

(1) Composite particles including a silicon-based material integrated with a magnesium-based material are formed through reduction.
(2) Pores are formed inside of the composite particles by removing Mg or MgO from the composite particles through acid treatment.
(3) Through CVD treatment, the surfaces of the composite particles are coated with carbon, as well as the inner parts of the pores of the composite particles are filled with carbon penetrating into the pores.

[Test Example 2: XRD determination and elemental analysis]

It is shown by elemental analysis through X-ray diffractometry (XRD) and X-ray fluorescence spectrometry (XRF) that the negative electrode active material obtained from each example contains silicon (Si), silicon oxide ($SiO_x$, $0 < x \leq 1$), and magnesium silicon oxide ($MgSiO_3$, $Mg_2SiO_4$). According to XRF, the molar ratio (Si/Mg) of Si atoms to Mg atoms in Example 1 was 29.5.

[Test example 3: Initial characteristics of battery]

Each of the coin cells according to examples and comparative examples was charged/discharged in a constant current mode of 0.2 C with a cutoff voltage of 1.5 V. A value calculated by dividing the discharge capacity at the initial charge/discharge cycle by the weight of the negative electrode active material used in each of examples and comparative examples is referred to as 'initial capacity', which is defined by the following Mathematical formula 1:

[Mathematical formula 1]

$$\text{Initial capacity (mAh/g)} = \frac{\text{Discharge capacity (mAh) at initial charge/discharge cycle}}{\text{Weight (g) of negative electrode active material}}$$

In addition, the charge/discharge efficiency (referred to as 'initial efficiency' hereinafter) at the initial charge/-discharge cycle is defined by the following Mathematical formula 2:

[Mathematical formula 2]

$$\text{Initial efficiency (\%)} = \frac{\text{Discharge capacity at initial charge/discharge cycle}}{\text{Charge capacity at initial charge/discharge cycle}} \times 100\%$$

The results of Test Example 3 are shown in the following Table 1 together with the above-described preparation conditions.

[Table 1]

|  | SiO:Mg | SiO particle diameter ($\mu$m) | Reduction atmosphere temperature (°C) | Reduction product:Hydrochloric acid | CVD Carbon weight (%) | Initial capacity (mAh/g) | Initial efficiency (%) |
|---|---|---|---|---|---|---|---|
| Ex. 1 | 1:1 | 5 | 800 | 10 g:200 mL | 7 | 1963 | 84.7 |
| Ex. 2 | 1:1 | 5 | 800 | 20 g:200 mL | 7 | 2005 | 85.9 |
| Ex. 3 | 2:1 | 5 | 800 | 20 g:200 mL | 7 | 2116 | 88.3 |
| Ex. 4 | 4:1 | 5 | 800 | 20 g:200 mL | 7 | 1749 | 78.7 |
| Ex. 5 | 2:1 | 5 | 800 | 20 g:200 mL | 11 | 2053 | 88.8 |
| Ex. 6 | 2:1 | 1 | 800 | 20 g:200 mL | 8 | 2530 | 90.1 |
| Ex. 7 | 2:1 | 1 | 680 | 20 g:200 mL | 7 | 2150 | 85 |
| Comp. Ex. 1 | - | 5 | - | - | 5 | 1665 | 76.4 |

[Test Example 4: Life characteristics of battery]

The coin cell obtained from each of examples and comparative example was further subjected to one charge/discharge cycle under the same conditions as Test Example 1 in addition to the initial charge/discharge cycle performed therein, and repeatedly subjected to the same 48 charge/discharge cycles in a constant current mode of 0.5 C.

In other words, a total of 50 charge/discharge cycles were repeated along with the first and the second charge/discharge cycles. FIG. 7 is a graph illustrating cycle characteristics of the coin cell according to each of examples and comparative example. Particularly, FIG. 7 is a graph plotted by taking a cycle number of charge/discharge cycles as the vertical axis and the discharge capacity of each of examples and comparative example as the horizontal axis.

[Discussion of test results of examples and comparative example]

Hereinafter, the above test results will be discussed. However, the following discussion is a hypothesis at the present time, and the present disclosure is not bound by theory.

Examples 1 to 6 in which SiO is reduced by introducing Mg are superior in terms of initial capacity, initial efficiency and cycle characteristics for at least initial 20 cycles, as compared to Comparative example 1 in which no reduction treatment is carried out. It is thought that since Si portions capable of lithium intercalation are increased by the reduction treatment, the coin cells have improved battery capacity. In addition, it is thought that since silicon oxide ($SiO_x$) producing a lithium silicate phase as an irreversible component at the initial charge/discharge cycle is decreased through the reduction treatment, the coin cells show improved initial efficiency. Particularly, it is thought that since Example 6 uses SiO having a smaller particle diameter as a starting material, reduction treatment and acid treatment are accomplished more promptly, resulting in high initial capacity and initial efficiency. In addition, it is thought that since SiO having a small particle diameter is used, lithium-ion intercalation/deintercalation proceeds smoothly, resulting in improvement of battery life characteristics. It is thought that although Example 7 uses a starting material of SiO having the same particle diameter (1 $\mu$m) as Example 6, a degree of reduction of SiO is lower as compared to Example 6 due to a lower reduction temperature, resulting in lower initial capacity and lower initial efficiency as compared to Example 6.

In Examples 1 to 7, the reason why cycle characteristics are relatively stabilized can be thought as follows.

(1) The produced magnesium silicon oxide phases and the remaining silicon oxide phases function as a matrix of Si to alleviate swelling/shrinking during charge/discharge.

(2) Since the pores formed by the acid treatment are filled with carbon, side reactions with an electrolyte are inhibited and conductivity is imparted, so that deterioration of the negative electrode material is inhibited.

## Claims

1. A negative electrode active material for a nonaqueous electrolyte secondary battery, comprising porous composite particles containing silicon and silicon oxide ($SiO_x$, $0 < x \le 2$),

   wherein the pores of the porous composite particles are partially or totally filled with carbon, and
   the surfaces of the porous composite particles are partially or totally coated with carbon.

2. The negative electrode active material according to claim 1,
   wherein the porous composite particles further contain magnesium silicon oxide.

3. The negative electrode active material according to claim 2,
   wherein the magnesium silicon oxide comprises at least one of $MgSiO_3$ and $Mg_2SiO_4$.

4. The negative electrode active material according to claim 2,
   wherein the molar ratio (Si/Mg) of Si atoms to Mg atoms in the negative electrode active material is 10-50.

5. The negative electrode active material according to any one of claims 1 to 4,
   wherein the porous composite particles contain no magnesium oxide (MgO) at least on the surfaces thereof.

6. The negative electrode active material according to any one of claims 1 to 4,
   wherein the total weight of carbon filling the pores of the porous composite particles and carbon covering the surfaces thereof is 5-20 wt%, based on the porous composite particles.

7. The negative electrode active material according to any one of claims 1 to 4,
   wherein the porous composite particles have an average particle diameter of 100 nm to 20 $\mu$m.

8. The negative electrode active material according to any one of claims 1 to 4,
   wherein the porous composite particles comprise Si, O and Mg elements.

9.  A negative electrode, comprising:

    a negative electrode current collector, and
    a negative electrode active material layer formed on the negative electrode current collector and comprising the negative electrode active material as defined in any one of claims 1 to 4.

10. A nonaqueous electrolyte secondary battery comprising the negative electrode as defined in claim 9.

11. A method for preparing a negative electrode active material for a nonaqueous electrolyte secondary battery, comprising:

    a reduction step in which silicon oxide ($SiO_a$, $0 < a \leq 2$) is allowed to react with metallic magnesium (Mg),
    an acid treatment step in which the material obtained after the reaction is treated with an acid, and
    a carbon deposition step in which carbon is deposited on the material obtained after the acid treatment.

12. The method according to claim 11,
    wherein porous composite particles having pores on the surfaces thereof and inside thereof are formed in the acid treatment step.

13. The method according to claim 12,
    wherein the pores are partially or totally filled with carbon in the carbon deposition step.

14. The method according to any one of claims 11 to 13,
    wherein the molar ratio (Si/Mg) of Si atoms to Mg atoms is 0.1-3 in the reduction step.

15. The method according to any one of claims 11 to 13,
    wherein the amount of the acid added per g of the material obtained from the reduction step is 1-100 mmol in the acid treatment step.

16. The method according to any one of claims 11 to 13,
    wherein the carbon deposition step is carried out by depositing carbon at 500-900°C.

FIG. 1

FIG. 2

FIG. 3

FIG. 4

FIG. 5

FIG. 6

Mg

FIG. 7

## INTERNATIONAL SEARCH REPORT

| International application No. |
|---|
| **PCT/KR2024/021237** |

| A. | CLASSIFICATION OF SUBJECT MATTER |
|---|---|

**H01M 4/36**(2006.01)i; **H01M 4/38**(2006.01)i; **H01M 4/48**(2010.01)i; **H01M 4/134**(2010.01)i; **H01M 10/0525**(2010.01)i; **C01B 33/113**(2006.01)i; **C01B 32/05**(2017.01)i; **H01M 4/02**(2006.01)i

According to International Patent Classification (IPC) or to both national classification and IPC

| B. | FIELDS SEARCHED |
|---|---|

Minimum documentation searched (classification system followed by classification symbols)

H01M 4/36(2006.01); H01M 10/052(2010.01); H01M 10/0525(2010.01); H01M 4/13(2010.01); H01M 4/48(2010.01); H01M 4/58(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 이차전지 (secondary battery), 음극 활물질 (anode active material), 산화 규소 (silicon oxide, SiO), 다공성 (porous), 탄소 (carbon), 규화 마그네슘 산화물 (magnesium silicate oxide), 마그네슘 (magnesium, Mg), 산 처리 (acid treatment)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | KR 10-2022-0091674 A (DAE JOO ELECTRONIC MATERIALS CO., LTD.) 01 July 2022 (2022-07-01)<br>    See claims 1, 4, 7, 9, 14-17, 19, 20, 23, 24 and 27; paragraphs [0057]-[0059], [0063], [0079]-[0085], [0087], [0111], [0121], [0122], [0126], [0147], [0177]-[0181], [0190], [0212], [0213], [0229]-[0232], [0242], [0240]-[0251], [0267]-[0275], [0282], [0296]-[0298] and [0301]; and tables 1 and 2. | 1-10 |
| Y | | 11-16 |
| Y | KR 10-2017-0090449 A (CORNING INCORPORATED) 07 August 2017 (2017-08-07)<br>    See claims 1, 24 and 25; and paragraphs [0055] and [0065]-[0068]. | 11-16 |
| A | KR 10-2019-0066596 A (DAE JOO ELECTRONIC MATERIALS CO., LTD.) 13 June 2019 (2019-06-13)<br>    See abstract; and claims 1-15. | 1-16 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **08 April 2025** | **08 April 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2024/021237**

### C. DOCUMENTS CONSIDERED TO BE RELEVANT

| Category* | Citation of document, with indication, where appropriate, of the relevant passages | Relevant to claim No. |
|---|---|---|
| A | KR 10-2022-0120742 A (IUCF-HYU (INDUSTRY-UNIVERSITY COOPERATION FOUNDATION HANYANG UNIVERSITY)) 31 August 2022 (2022-08-31) See abstract; and claims 1-15. | 1-16 |
| A | KR 10-2019-0065182 A (DAE JOO ELECTRONIC MATERIALS CO., LTD.) 11 June 2019 (2019-06-11) See abstract; and claims 1-21. | 1-16 |

Form PCT/ISA/210 (second sheet) (July 2022)

**INTERNATIONAL SEARCH REPORT**
**Information on patent family members**

International application No.

**PCT/KR2024/021237**

| Patent document cited in search report | | | Publication date (day/month/year) | Patent family member(s) | | | Publication date (day/month/year) |
|---|---|---|---|---|---|---|---|
| KR | 10-2022-0091674 | A | 01 July 2022 | CN | 116963999 | A | 27 October 2023 |
| | | | | EP | 4269342 | A1 | 01 November 2023 |
| | | | | EP | 4269342 | A4 | 03 July 2024 |
| | | | | JP | 2024-501826 | A | 16 January 2024 |
| | | | | KR | 10-2556465 | B1 | 19 July 2023 |
| | | | | TW | 202232811 | A | 16 August 2022 |
| | | | | US | 2024-0047660 | A1 | 08 February 2024 |
| | | | | WO | 2022-139244 | A1 | 30 June 2022 |
| KR | 10-2017-0090449 | A | 07 August 2017 | AU | 2011-293715 | A1 | 31 January 2013 |
| | | | | CN | 103069055 | A | 24 April 2013 |
| | | | | CN | 103069055 | B | 03 August 2016 |
| | | | | CN | 104271505 | A | 07 January 2015 |
| | | | | CN | 106103344 | A | 09 November 2016 |
| | | | | CN | 106463702 | A | 22 February 2017 |
| | | | | CN | 106463702 | B | 21 February 2020 |
| | | | | CN | 107004830 | A | 01 August 2017 |
| | | | | CN | 107004830 | B | 28 April 2020 |
| | | | | CN | 108290740 | A | 17 July 2018 |
| | | | | CN | 108290740 | B | 04 March 2022 |
| | | | | EP | 2609234 | A2 | 03 July 2013 |
| | | | | EP | 2609234 | A4 | 04 November 2015 |
| | | | | EP | 2791058 | A1 | 22 October 2014 |
| | | | | EP | 2819949 | A1 | 07 January 2015 |
| | | | | EP | 3130023 | A1 | 15 February 2017 |
| | | | | EP | 3224881 | A1 | 04 October 2017 |
| | | | | EP | 3380436 | A1 | 03 October 2018 |
| | | | | EP | 3380436 | B1 | 26 July 2023 |
| | | | | JP | 2013-536151 | A | 19 September 2013 |
| | | | | JP | 2015-500787 | A | 08 January 2015 |
| | | | | JP | 2015-514660 | A | 21 May 2015 |
| | | | | JP | 2017-514273 | A | 01 June 2017 |
| | | | | JP | 2017-536676 | A | 07 December 2017 |
| | | | | JP | 5878535 | B2 | 08 March 2016 |
| | | | | JP | 6251685 | B2 | 20 December 2017 |
| | | | | KR | 10-2013-0108531 | A | 04 October 2013 |
| | | | | KR | 10-2014-0131566 | A | 13 November 2014 |
| | | | | KR | 10-2016-0142863 | A | 13 December 2016 |
| | | | | KR | 10-2018-0087340 | A | 01 August 2018 |
| | | | | KR | 10-2421529 | B1 | 15 July 2022 |
| | | | | KR | 10-2544089 | B1 | 15 June 2023 |
| | | | | TW | 201217290 | A | 01 May 2012 |
| | | | | TW | 201633586 | A | 16 September 2016 |
| | | | | TW | I560163 | B | 01 December 2016 |
| | | | | US | 10439206 | B2 | 08 October 2019 |
| | | | | US | 10629900 | B2 | 21 April 2020 |
| | | | | US | 11139473 | B2 | 05 October 2021 |
| | | | | US | 2012-0052656 | A1 | 01 March 2012 |
| | | | | US | 2013-0149549 | A1 | 13 June 2013 |
| | | | | US | 2013-0209781 | A1 | 15 August 2013 |
| | | | | US | 2013-0220211 | A1 | 29 August 2013 |

Form PCT/ISA/210 (patent family annex) (July 2022)

**INTERNATIONAL SEARCH REPORT**
Information on patent family members

International application No.

**PCT/KR2024/021237**

| Patent document cited in search report | | | Publication date (day/month/year) | Patent family member(s) | | | Publication date (day/month/year) |
|---|---|---|---|---|---|---|---|
| | | | | US | 2015-0291470 | A1 | 15 October 2015 |
| | | | | US | 2017-0033353 | A1 | 02 February 2017 |
| | | | | US | 2017-0149059 | A1 | 25 May 2017 |
| | | | | US | 2017-0271651 | A1 | 21 September 2017 |
| | | | | US | 2020-0220170 | A1 | 09 July 2020 |
| | | | | US | 8415555 | B2 | 09 April 2013 |
| | | | | US | 9917299 | B2 | 13 March 2018 |
| | | | | WO | 2012-027121 | A2 | 01 March 2012 |
| | | | | WO | 2012-027121 | A3 | 09 August 2012 |
| | | | | WO | 2013-090153 | A1 | 20 June 2013 |
| | | | | WO | 2013-130696 | A1 | 06 September 2013 |
| | | | | WO | 2015-157538 | A1 | 15 October 2015 |
| | | | | WO | 2016-085953 | A1 | 02 June 2016 |
| | | | | WO | 2017-091543 | A1 | 01 June 2017 |
| KR | 10-2019-0066596 | A | 13 June 2019 | CN | 111433949 | A | 17 July 2020 |
| | | | | EP | 3723171 | A1 | 14 October 2020 |
| | | | | EP | 3723171 | A4 | 11 August 2021 |
| | | | | JP | 2021-506059 | A | 18 February 2021 |
| | | | | JP | 7564710 | B2 | 09 October 2024 |
| | | | | KR | 10-2236365 | B1 | 06 April 2021 |
| | | | | US | 2020-0295352 | A1 | 17 September 2020 |
| | | | | WO | 2019-112325 | A1 | 13 June 2019 |
| KR | 10-2022-0120742 | A | 31 August 2022 | KR | 10-2516476 | B1 | 03 April 2023 |
| KR | 10-2019-0065182 | A | 11 June 2019 | CN | 111418095 | A | 14 July 2020 |
| | | | | CN | 119069675 | A | 03 December 2024 |
| | | | | EP | 3719881 | A1 | 07 October 2020 |
| | | | | EP | 3719881 | A4 | 21 July 2021 |
| | | | | EP | 3719881 | B1 | 21 August 2024 |
| | | | | JP | 2021-504918 | A | 15 February 2021 |
| | | | | JP | 7593809 | B2 | 03 December 2024 |
| | | | | US | 2021-0184204 | A1 | 17 June 2021 |
| | | | | WO | 2019-108050 | A1 | 06 June 2019 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023221546 A